# FASCICULE DE BREVET EUROPEEN

(11) **EP 0 369 863 B1**
(45) Date de publication et mention de la délivrance du brevet: **07.04.1993**
(21) Numéro de dépôt: 89403093.1
(22) Date de dépôt: 09.11.1989
(51) Int. Cl.: B62K 5/04, B62D 37/04, B62D 9/02

(54) **Dispositif de stabilisation pour véhicule inclinable**
Stabilisierungsvorrichtung für schrägstellbares Fahrzeug
Stabilising device for inclinable vehicle

(30) Priorité: 15.11.1988 FR 8814823
(43) Date de publication de la demande: 23.05.1990
(73) Titulaire: Patin, Pierre, F-75005 Paris (FR)
(72) Inventeur: Patin, Pierre, F-75005 Paris (FR)

(56) Documents cités:
- EP-A- 0 251 906

## Description

La présente invention a pour objet un dispositif de stabilisation pour véhicule inclinable comprenant, d'une façon générale, une partie primaire reposant sur le sol par l'intermédiaire d'au moins trois roues, respectivement une roue avant directrice et deux roues arrière formant un train arrière et une partie secondaire montée pivotante sur la partie primaire autour d'un axe de suspension parallèle au sol dans le plan médian.

De tels véhicules sont décrits par exemple par les brevets français 1.562.258 et 2.031.813 du même inventeur. Le train arrière est constitué de deux roues dont les axes sont perpendiculaires au plan médian de la partie primaire et celles-ci sont montées préférentiellement de façon à pouvoir s'incliner avec la partie primaire, par rapport au sol, d'un côté ou de l'autre, de telle sorte que le véhicule qui, à l'arrêt, bénéficie de la stabilité apportée par les trois roues, se comporte, en revanche, comme un véhicule à deux roues pouvant, dans un tournant, s'incliner vers l'intérieur de façon à compenser l'effet de la force centrifuge. Dans ce cas, en effet, le plan médian de la partie primaire passant par la roue avant et par le centre du train arrière coïncide avec le plan médian de la partie secondaire passant par l'axe de suspension et le centre de gravité et est incliné suivant la verticale apparente, c'est à dire la résultante des forces de pesanteur et des forces centrifuges.

Pour une bonne stabilité, il est préférable que, comme la roue avant, les deux roues du train arrière s'inclinent avec la partie primaire en restant parallèles à son plan médian et, à cet effet, le train arrière est avantageusement monté sur la partie primaire par l'intermédiaire d'un système à parallélogramme déformable comprenant deux montants latéraux parallèles au plan médian de la partie primaire, articulés à leurs extrémités sur deux balanciers parallèles, articulés sur la partie primaire, respectivement, autour de deux axes superposés placés dans le plan médian et parallèles au sol, les axes des deux roues étant montés respectivement sur lesdits montants suivant des directions perpendiculaires au plan médian.

Dans le brevet français n° 86-09332 déposé le 27 Juin 1986 par le même inventeur, on a décrit un système permettant d'augmenter la stabilité dynamique du véhicule par élévation du centre de gravité par rapport au sol permettant d'augmenter l'énergie potentielle et par conséquent la stabilité du véhicule quand celui-ci tend à s'incliner, une une telle augmentation d'énergie ne pouvant s'effectuer spontanément sans un apport d'énergie extérieure.

A cet effet, le dispositif décrit dans le brevet français n° 86.09332 comprend un système multiplicateur de rotation permettant, en cas d'inclinaison de la partie primaire d'un angle A par rapport à la verticale, de commander une rotation de la partie secondaire d'un angle B supérieur à A déterminant un soulèvement du centre de gravité de la partie secondaire par rapport au sol. Selon l'un des modes de réalisation décrits dans le brevet 86.09332, le système multiplicateur de rotation comprend une traverse de commande solidaire en rotation de la partie secondaire et s'étendant transversalement de part et d'autre du plan médian de celle-ci passant par l'axe de suspension, et deux bras transversaux montés respectivement sur les deux montants latéraux du parallélogramme, transversalement à ces derniers et prenant appui respectivement chacun sur l'extrémité de la traverse de commande opposée au montant latéral correspondant par l'intermédiaire d'une liaison coulissante.

Le principe de fonctionnement d'un tel système est décrit en détail dans le brevet français n° 86.09332 et n'a donc pas besoin d'être développé. D'une façon générale, lors d'une rotation de la partie primaire par rapport au sol, la partie secondaire est soulevée grâce à la rotation d'un élément tel qu'un bras rotatif articulé sur le primaire et qui porte ce secondaire, cette rotation étant multiple de celle du plan médian de la partie primaire par rapport au sol. Dans le brevet précédent, on a décrit différents moyens permettant de ne faire intervenir cette liaison en rotation qu'en tant que de besoin, particulièrement à l'arrêt, grâce à un système d'embrayage ou de crabotage susceptible d'être commandé par le conducteur et/ou par la vitesse et/ou par l'inclinaison par rapport à la verticale réelle ou apparente, c'est à dire la résultante de la pesanteur et de la force centrifuge.

L'invention a pour object un nouveau dispositif de stabilisation appliquant le même principe et utilisant d'une façon générale, les dispositions décrites dans le brevet français n° 86.09332, le nouveau dispositif étant plus simple et moins onéreux que les dispositions prévues antérieurement et apportant une amélioration de la fiabilité et de la sécurité du véhicule.

L'invention se rattache donc au dispositif et procédé de stabilisation selon respectivement les premières parties des revendications 1 et 10 et dans lequel le système multiplicateur de rotation comprend une traverse solidaire en rotation de la partie secondaire et deux bras transversaux montés respectivement sur les deux montants latéraux du parallélogramme, transversalement à ces derniers et prenant appui, respectivement, chacun sur l'extrémité de la traverse de commande opposée au montant latéral correspondant (EP-A-251906).

Conformément à l'invention comme précisé dans les revendications 1 et 10, chaque bras transversal peut se déplacer parallèlement à lui-même le long du montant latéral correspondant lorsque les plans médians des deux parties primaire et secondaire coïncident et sont orientées suivant la direction de la verticale apparente et, en cas de déplacement du centre de gravité de la partie secondaire sous l'action de la pesanteur et des forces extérieures d'un côté ou de l'autre du plan médian de la partie primaire, on détermine la solidarisation d'au moins un des deux bras transversaux avec le montant latéral correspondant de façon à mettre en oeuvre le système multiplicateur de rotation dans le sens permettant un soulèvement du centre de gravité de la partie secondaire par rotation relative de celle-ci par rapport à la partie primaire avec production d'un couple de redressement ramenant les plans médians des deux parties primaire et secondaire sensiblement dans l'alignement l'un de l'autre et dans la direction de la verticale apparente.

A cet effet, selon l'invention, chaque bras transversal est relié au montant latéral correspondant par l'intermédiaire d'une liaison glissante permettant le déplacement du bras le long du montant latéral en restant perpendiculaire à ce dernier, ladite liaison comprenant des moyens de commande sélective du blocage et du déblocage du bras en fonction des orientations relatives des plans médians des deux parties primaire et secondaire par rapport à la direction de la verticale apparente.

Dans un premier mode de réalisation de l'invention, la liaison glissante entre chaque bras transversal et le montant latéral correspondant comprend quatre patins placés en deux paires de chaque côté, respectivement interne et externe du montant et sur deux niveaux, respectivement supérieur et inférieur, chaque montant pouvant glisser à frottement doux entre les patins correspondants lorsque les deux bras sont alignés en position moyenne avec la traverse, lesdits patins étant susceptibles d'être appliqués deux par deux sur les côtés opposés du montant et à des niveaux différents pour provoquer la solidarisation par frottement du montant avec le bras correspondant lorsque ce dernier est écarté de sa position moyenne par la traverse du fait d'un déplacement du centre de gravité par rapport au plan médian de la partie primaire.

Dans un autre mode de réalisation, chaque liaison glissante entre un bras transversal et le montant latéral correspondant comprend une première paire de galets montés rotatifs sur le bras autour d'axes parallèles à l'axe de suspension et placés respectivement de part et d'autre du montant latéral et à deux niveaux, le galet supérieur prenant appui sur le côté interne du montant et le galet inférieur sur le côté externe, chaque galet étant associé à une roue libre ou autre moyen équivalent autorisant sa rotation uniquement dans le sens correspondant à une descente du bras vers le bas du montant de telle sorte que, en cas d'action de la traverse sur le bras tendant à faire monter ce dernier par rapport à l'axe de suspension, les deux galets appliqués respectivement sur les deux côtés du montant se bloquent en rotation et déterminent la solidarisation du bras avec le montant et par conséquent la mise en oeuvre du système multiplicateur.

Dans ce cas, la solidarisation de la traverse avec le parallélogramme est assurée, selon le sens d'inclinaison, par celui des bras qui a tendance à se déplacer vers le haut le long de son montant, les deux bras pouvant reposer respectivement, dans le sens de descente, sur deux butées élastiques solidaires de la partie primaire.

Mais il est possible également de mettre en oeuvre les deux bras pour la commande du système multiplicateur de rotation, chaque liaison glissante comprenant alors une seconde paire de galets placée respectivement sur l'autre niveau et du côté opposé aux galets de la première paire et associé chacun à une roue libre permettant la rotation des galets de la seconde paire dans le sens de montée du bras le long du montant correspondant et bloquant la rotation dans le sens de descente de façon à déterminer, dans ce cas, la solidarisation du bras avec le montant.

Dans un mode de réalisation encore plus perfectionné, chaque bras transversal est associé à un servo-mécanisme de commande d'un déplacement contrôlé du bras vers le bas du montant correspondant permettant à la partie primaire de suivre une inclinaison donnée volontairement à la partie secondaire. A cet effet, le servo-mécanisme comprend deux pignons portés respectivement par les deux bras transversaux engrenant chacun avec une crémaillère ménagée le long du montant correspondant et montés chacun sur un arbre de rotation perpendiculaire au montant et susceptible d'être solidarisé en rotation au moyen d'un embrayage avec un arbre entraîné en rotation en permanence par un moteur dans le sens permettant le déplacement de chaque pignon vers le bas le long de la crémaillère correspondante, le servo-mécanisme comprenant, en outre, un levier de commande de l'un ou l'autre des embrayages articulé autour d'un axe de suspension sur une pièce suivant les mouvements d'inclinaison de la partie primaire par rapport au sol et actionné par une pièce suivant les mouvements d'inclinaison de la partie secondaire pour la commande de l'un ou l'autre des embrayages lorsque l'inclinaison de la partie secondaire du côté du montant correspondant est supérieure à l'inclinaison de la partie primaire du même côté.

D'autres perfectionnements pourraient encore être apportés à l'invention, mais celle-ci sera mieux comprise par la description détaillée de plusieurs modes de réalisation, en référence aux dessins annexés.

La Figure 1 représente schématiquement, en perspective, un véhicule inclinable à trois roues.

La Figure 2 représente schématiquement le principe de fonctionnement du dispositif connu.

La Figure 3 représente schématiquement un système à parallélogramme déformable muni d'un dispositif de blocage selon l'invention, dans un premier mode de réalisation.

La Figure 4 est une vue partielle schématique représentant un second mode de blocage d'un bras transversal.

La Figure 5 est un schéma de fonctionnement d'une variante de réalisation.

La Figure 6 représente schématiquement une variante plus perfectionnée comprenant une servo-commande.

Bien entendu, sur les Figures, les organes sont représentés schématiquement d'une façon permettant d'en mieux comprendre le fonctionnement, les formes réelles pouvant être déterminées facilement en fonction des besoins.

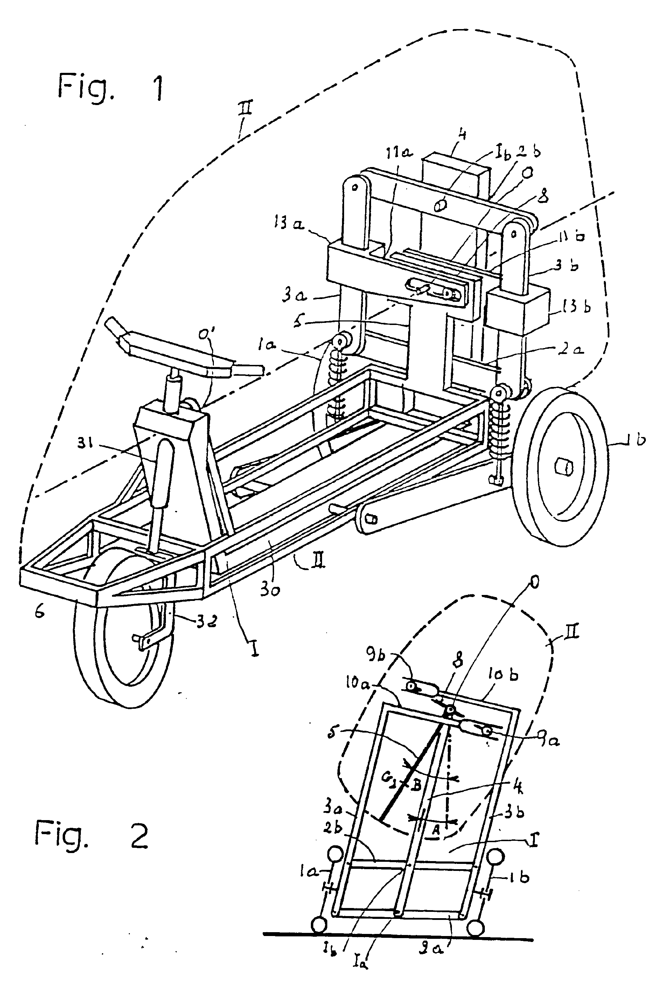

Sur la Figure 1, on a représenté schématiquement un véhicule à trois roues selon l'invention comprenant une partie primaire I, constituée d'un châssis 30 reposant sur le sol par trois roues et sur laquelle est suspendue une partie secondaire II.

Le châssis 30 porte à l'avant une colonne de direction 31 qui reçoit la fourche de rotation 32 et repose sur le sol par la roue directrice. A l'arrière, un mât de structure 4 repose sur les deux roues 1a et 1b constituant le train arrière par l'intermédiaire d'un système à parallélogramme articulé qui comprend deux montant latéraux 3a, 3b, parallèles entre eux et au mât de structure 4, c'est à dire, en fait, au plan médian P de la partie primaire passant par la colonne de direction 31 et par le centre du train arrière, les deux montants latéraux 3a, 3b étant articulés à leurs extrémités sur deux balanciers 2a, 2b, articulés sur le mât de structure 4 autour d'axes Ia, Ib superposés parallèles au sol et placés dans le plan médian de la partie primaire.

Les deux roues 1a et 1b sont reliées aux deux montants latéraux 3a, 3b, soit directement soit, comme on l'a représenté, par des bras de suspension ou autres mécanismes permettant un mouvement relatif entre les roues et les montants du parallélogramme mais maintenant les axes des deux roues dans des directions perpendiculaires au plan médian et, par conséquent, aux deux montants latéraux.

La partie secondaire II constitue une caisse montée sur un châssis 6 qui est suspendu sur la partie primaire de façon à pouvoir tourner par rapport à celle-ci autour d'un axe de suspension O-O′ parallèle au sol et par lequel passent donc les plans médians des deux parties primaire I et secondaire II.

Le système multiplicateur de rotation est actionné par une traverse 8 solidaire en rotation de la partie secondaire autour de l'axe de suspension O-O′. Dans l'exemple représenté sur la Figure 1, la traverse 8 est centrée sur l'axe O-O′ et s'étent symétriquement de part et d'autre de ce dernier et elle est reliée au châssis 6 de la partie secondaire par un bras 5 de telle sorte que toute rotation de la partie secondaire autour de son axe de suspension détermine une rotation du même angle de la traverse 8 et inversement.

Le principe du système multiplicateur de rotation faisant l'objet du brevet précédent 86-09332 (aussi EP-A-251906) est représenté schématiquement sur la Figure 2.

Sur cette figure, on a symbolisé par de simples lignes la partie primaire I comprenant les deux roues 1a, 1b du train arrière et le système à parallélogramme déformable comprenant les deux balanciers 2a et 2b et les deux montants latéraux 3a, 3b, l'ensemble formant un parallélogramme articulé sur le mât central 4 portant l'axe O de suspension de la partie secondaire II. Cette dernière comprend notamment le mât 5 relié à la traverse 8 qui, dans l'exemple représenté, passe par l'axe de suspension 0.

Aux deux extrémités de la traverse 8 sont montés des galets 9a, 9b qui se déplacent dans des coulisses portées par des bras 10a, 10b montés sur les deux montants 3a, 3b de façon à s'étendre en console vers l'intérieur perpendiculairement auxdits montants et en dépassant l'axe de suspension O de telle sorte que le galet 9a placé à l'extrémité de la traverse 8 située vers la droite sur la figure s'engage dans la coulisse placée à l'extrémité du bras 10a fixé sur le montant latéral 3a placé à gauche sur la figure.

Grâce à cette disposition, on voit que, les longueurs des montants 3a et 3b et du mât 4 étant identiques, lorsque le parallélogramme articulé se réduit à un rectangle, le bras 5 et le mât 4 se projettent l'un sur l'autre. C'est le cas lorsque le système est au repos sur un plan horizontal. Si, alors, le primaire du véhicule (mât 4) s'incline d'un angle A par rapport à la verticale, le bras 5 tourne d'un angle B > A ; les dimensions des bras et du balancier sont choisies pour que, compte tenu des masses et des positions respectives des centres de gravité du primaire et du secondaire, le centre de gravité de l'ensemble s'éloigne du sol dans ce déplacement, ce qui assure la stabilité du système, puisqu'un tel mouvement ne pourrait se produire sans fourniture d'énergie.

Cependant ce dispositif, comme il est d'ailleurs indiqué dans le brevet en référence, présente certains inconvénients :
- il tend à s'opposer à l'inclinaison du véhicule en courbe pour équilibrer l'action de la force centrifuge,
- il n'agit correctement que si le véhicule repose sur un plan horizontal.

Le brevet en référence prévoit donc que la liaison entre la partie primaire et la partie secondaire puisse être placée sous la dépendance d'un système d'embrayage ou de crabotage et, dans ledit brevet, on a décrit un système d'embrayage qui se place entre le bras 5 et la traverse 8 au niveau de l'axe O, l'embrayage ne se produisant que lorsque le plan axial de la caisse s'écarte de la direction de la pesanteur apparente dans le sens de la chute du véhicule. De plus, un système à commande par dispositif centrifuge solidarise les parties primaire et secondaire à partir d'une certaine vitesse pour rendre inopérant, en toute certitude, le dispositif de blocage.

La présente invention permet de simplifier le dispositif et de diminuer le temps de réponse en assurant la continuité de la liaison entre la partie primaire et le système multiplicateur de rotation non plus sur l'axe de suspension sous la forme d'un embrayage entre la caisse et la traverse mais au niveau de l'attache des bras transversaux sur les montants latéraux du parallélogramme, la traverse restant ainsi solidaire de la caisse.

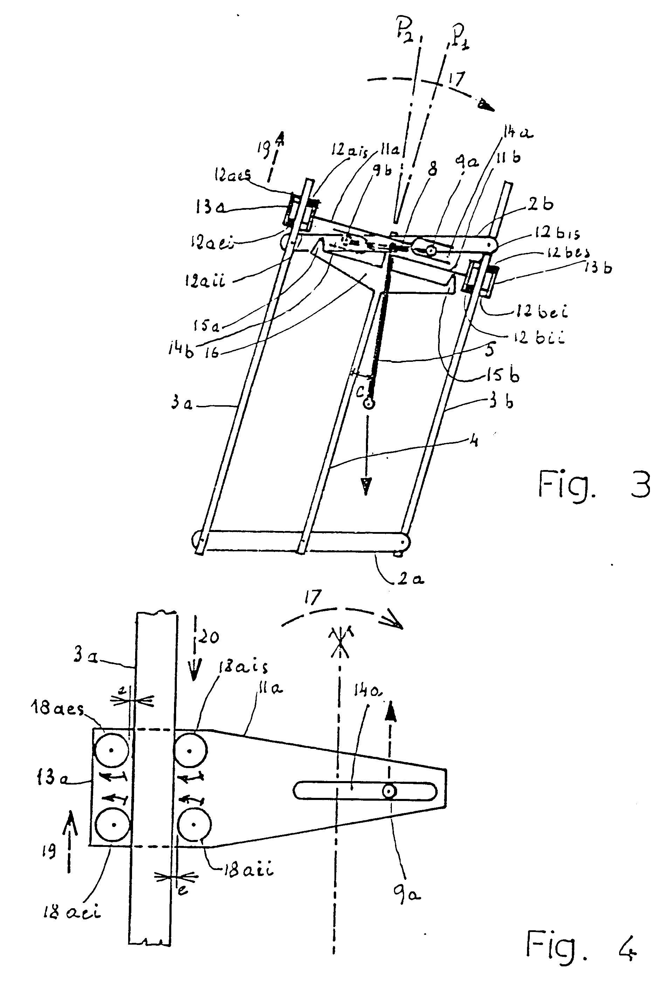

Un tel système selon l'invention est schématisé sur la Figure 3.

Sur cette figure, on voit que les bras 10a, 10b de la Figure 2, qui étaient fixés rigidement en des points fixes aux montants 3a, 3b, sont remplacés par des consoles glissantes 11a, 11b qui, lorsqu'elles ne sont pas chargées par les galets 9a, 9b, peuvent coulisser librement sur les montants 3a, 3b au cours de la déformation du parallélogramme articulé.

Chaque console coulissante telle que 11a, est donc constituée du bras 10a décrit précédemment et muni à son extrémité interne de la coulisse 14a dans laquelle se déplace le galet 9a, ce bras étant muni, à son extrémité externe en contact avec le montant latéral 3a, d'une glissière 13a munie de patins de friction disposés en deux paires placées de part et d'autre du montant 3a et à des niveaux différents. On distingue ainsi les patins externes respectivement supérieur 12aes et inférieur 12aei et les patins internes respectivement supérieur 12ais et inférieur 12aii.

Sur la Figure 3, on a également symbolisé le plan médian P₁ de la partie primaire, qui passe par les axes des deux balanciers 2a, 2b du parallélogramme déformable et le plan médian P₂ de la partie secondaire qui passe par l'axe de suspension O-O′ de celle-ci et dans lequel est placé le centre de gravité G₂. Ces deux plans P₁ et P₂ se coupent suivant l'axe de suspension O-O′.

Les deux consoles 11a, 11b reposent respectivement, en position d'équilibre, sur deux butées élastiques 15a, 15b placées symétriquement, de part et d'autre du plan P₁, sur un support fixe 16 solidaire du mât 4 de la partie primaire.

Dans cette position d'équilibre, les deux bras 11a, 11b sont alignés avec la traverse 8.

Cette position d'équilibre correspond à la coïncidence des deux plans médians P₁ de la partie primaire et P₂ de la partie secondaire et existe non seulement à l'arrêt ou en ligne droite, lorsque les deux plans P₁ et P₂ sont verticaux, mais également dans les courbes lorsque les deux plans sont inclinés du même angle par rapport au sol.

En effet, si on laisse la caisse s'orienter librement sous l'action de la pesanteur, le plan médian P₂ de la partie secondaire, qui passe par l'axe de suspension O′ et le centre de gravité G₂ a tendance à s'orienter suivant la direction de la verticale apparente, c'est à dire la résultante des forces exercées sur le véhicule par la pesanteur et la force centrifuge ou d'autres forces extérieures tel que l'action du vent.

Tant que, par exemple sous l'action du conducteur, les deux plans médians P₁ de la partie primaire et P₂ de la partie secondaire restent alignés suivant la direction de la verticale apparente, les deux bras 11a et 11b restent alignés avec la traverse 8 et sont soumis uniquement à la pesanteur apparente en reposant sur les butées 15a, 15b. Une inclinaison des deux plans P₁ et P₂ restant dans la direction de la verticale apparente provoque donc simplement un déplacement correspondant des glissières 13a, 13b le long des montants 3a, 3b. Par exemple, si le véhicule doit s'incliner vers la droite comme sur la Figure 3, la glissière 13a se déplace vers le haut le long du montant 3a de façon que le bras 11a reste perpendiculaire à ce dernier alors que la glissière 13b se déplace vers le bas de la même distance le long du montant 3b.

Mais si le plan médian de la partie primaire P₁ n'est pas incliné suivant la verticale apparente ou bien si, à l'arrêt sur un plan horizontal, le véhicule a tendance à tomber, par exemple vers la droite dans le sens de la flèche 17, en faisant avec la verticale un angle A, le poids de la partie secondaire appliqué en G₂ sur le bras 5 solidaire de la traverse 8 provoque l'ouverture d'un angle C avec le mât 4 et les deux galets 9a, 9b appuient respectivement vers le haut et vers le bas sur les deux extrémités des bras correspondants 11a, 11b qui sont ainsi soumis à un moment de rotation provoquant la compression des patins indiqués en noir sur la figure, c'est à dire, pour le bras 11a qui a tendance à monter, du patin externe inférieur 12aei et du patin interne supérieur 12ais et, pour le bras 11b qui a tendance à descendre, du patin externe supérieur 12bes et du patin interne inférieur 12bii.

Ce mouvement a pour premier effet, grâce au frottement des patins 12ais, 12aei, 12bes, 12bii de bloquer les consoles 11a, 11b par leurs glissières 13a, 13b sur les montants 3a, 3b. Si dans ces conditions le mouvement de chute tendait à continuer, la traverse 8 tournerait dans le sens des flèches 17, entraînant dans le même sens le centre de gravité G₂ qui s'éloignerait rapidement du sol, compte tenu du rapport multiplicatif de vitesse entre la rotation des montants et celle de la traverse. La montée de G₂ entraînerait alors celle du centre de gravité de l'ensemble, ce qui est évidemment impossible sans apport d'énergie extérieure. Il en résulte un couple de rappel exercé par la partie secondaire sur la partie primaire qui a tendance à redresser celle-ci de façon à la replacer suivant la direction de la verticale si le véhicule est à l'arrêt ou de la verticale apparente si le véhicule est en marche.

On constate que le dispositif qui vient d'être décrit est particulièrement simple mais que, lorsque le véhicule est en marche, il ne permettrait pas au conducteur d'anticiper sur la force centrifuge pour amorcer l'inclinaison du véhicule à l'entrée d'un virage. C'est pourquoi, dans un mode de réalisation plus perfectionné représenté sur la Figure 4, les patins de friction des glissières 13a, 13b sont remplacés par des roues libres ou autres dispositifs de blocage unidirectionnel.

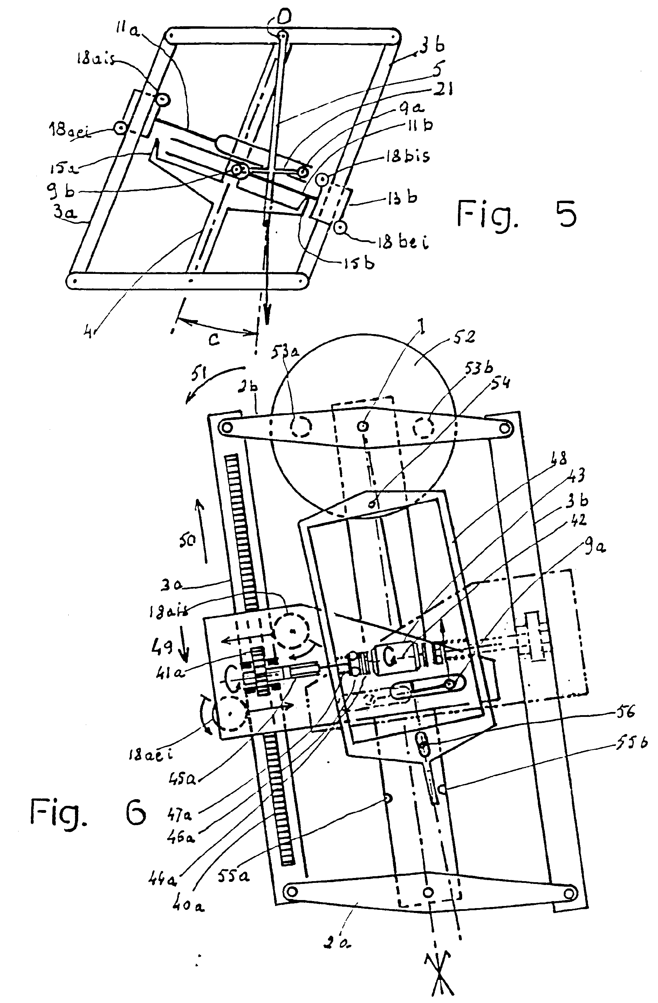

La Figure 5 est une vue schématique partielle représentant uniquement la console 11a associée au montant latéral gauche 3a. On voit que, dans ce cas, la glissière 13a est constituée par quatre galets placés à des niveaux différents de part et d'autre du montant 3a, respectivement une paire de galets externe 18aei, 18aes et une paire de galets internes 18aii et 18ais.

Si, en cas d'inclinaison du plan P₁ ne correspondant pas à la verticale apparente, le galet 9a exerce une action vers le haut sur l'extrémité de la console 11a, cet effort crée un moment de sens opposé à celui de la flèche 17 de la Figure 3 et la console 11a s'appuie sur le montant 3a par deux des galets 18ais et 18aei alors que les deux autres galets 18aes et 18aii sont séparés du montant par un léger jeu e.

Chaque galet est associé à une roue libre permettant la rotation dans un seul sens qui a été indiqué sur la figure par une flèche dont la pointe indique le sens dans lequel elle peut tourner et le culot celui dans lequel elle est bloquée.

Lorsque la console 11a n'est soumise à un aucun effort de la part du galet 9a, les quatre galets 18 fonctionnent comme une glissière permettant le déplacement de la console le long du montant latéral 3a. En revanche, si le galet 9a exerce un effort vers le haut, les deux galets 18aei et 18ais appliqués sur le montant latéral 3a et empêchés de tourner par la roue libre dans le sens permettant un déplacement vers le haut interdisent un tel déplacement qui se traduirait par un mouvement de chute du véhicule mais, en revanche, autorisent tout mouvement en sens inverse, c'est à dire vers le bas, se traduisant par un redressement du véhicule.

De la sorte, si l'on part d'une position d'équilibre verticale, un mouvement d'inclinaison du conducteur, par exemple vers la droite en regardant dans la direction du mouvement, déplace le centre de gravité de la partie secondaire vers la droite et par conséquent déplace la partie inférieure de celui-ci vers la gauche du mât de structure 4, ce qui a pour effet d'autoriser l'inclinaison à droite et de bloquer l'inclinaison à gauche, et c'est bien le but recherché lorsque le véhicule entre en courbe vers la droite.

On notera également que ce déplacement de la partie secondaire est aussi obtenu naturellement par l'action de la force centrifuge (ou du vent latéral), qui bloque donc l'inclinaison du véhicule vers l'extérieur de la courbe (ou vers le côté sous le vent) et l'autorise au contraire, voire la facilite, vers l'intérieur (ou le côté au vent), en tendant à créer un couple d'inclinaison.

Dans la disposition représentée sur la Figure 3, la traverse 8 est centrée sur l'axe de suspension O-O′. On peut considérer qu'une telle disposition présente l'inconvénient de concentrer l'ensemble des éléments dans la partie haute du parallélogramme articulé alors qu'en fait, la traverse 8, solidaire de la partie secondaire, peut exercer son effet de multiplication de rotation même si elle ne passe pas par l'axe de suspension O-O′. A titre d'exemple, la Figure 5 montre schématiquement une disposition dans laquelle la traverse 8 est décalée vers le bas par rapport à l'axe de suspension.

Sur cette Figure, on voit que les galets 9a, 9b sont fixés à une petite traverse 21 solidaire de la partie secondaire en hauteur et en rotation. Le mouvement des galets est alors légèrement différent du cas précédent, en ce sens que, sur la Figure 5 par exemple, dans une rotation C, le galet 9a monte un peu plus que le galet 9b ne descend et par conséquent la console 11a "soulevée" sera en prise avant la console 11b "abaissée". On voit donc qu'une seule des deux consoles sert au blocage et que l'on peut ne conserver que deux roues libres (18ais et 18aei, 18 bis et 18 bei) par exemple. De plus, la console soulevée a tendance à quitter l'appui de sa butée 15a, ce qui permet de simplifier celle-ci et supprime son action qui pourrait être parasite lorsque la console est abaissée et s'appuie sur la butée, ce qui diminue son action.

On a vu que tout déplacement du centre de gravité G₂ de la partie secondaire ou caisse entraînait pour l'ensemble du véhicule une possibilité d'inclinaison du côté de ce déplacement, un blocage de l'autre. Ainsi, si le conducteur se penche vers la droite, le véhicule peut s'incliner à droite, ce qui est évidemment conforme aux réactions naturelles du conducteur. Lorsque celui-ci arrête son véhicule sans en sortir, il reste en position droite et le véhicule fait de même. Mais, s'il veut en descendre, il risque de faire porter son poids au moins en partie d'un côté déterminé du secondaire, et le véhicule aura tendance à s'incliner de ce côté jusqu'au moment où le centre de gravité de la caisse passera à la verticale de l'axe de suspension O-O′. Il faut donc que lors d'un arrêt de ce type, la mise à l'arrêt du véhicule entraîne le blocage complet du système, par exemple au serrage du frein de parking (frein à main).

Ce résultat pourra être aisément obtenu en donnant à la traverse 21 de la Figure 5, porteuse des galets 9a, 9b, la possibilité d'être tirée vers le haut, par exemple par coulissement sur le bras 5 ou par soulèvement de ce bras, ce qui a pour effet de bloquer les deux consoles glissantes 11a et 11b et d'empêcher toute déformation du parallélogramme déformable. Simultanément on bloquera le bras 5 en position médiane par un cran d'arrêt pour qu'il n'appuie pas en permanence sur les consoles. Il s'agit là de dispositifs simples et connus dont la représentation n'apparaît pas nécessaire.

Bien entendu, l'invention ne se limite pas aux seuls modes de réalisation qui ont été décrits et qui pourraient être perfectionnés ou modifiés, notamment par l'emploi de moyens équivalents, sans s'écarter du cadre de protection défini par les revendications.

Ainsi, les roues libres associées aux galets 18 pour commander le blocage des consoles dans un sens sur les montants latéraux correspondants pourront être remplacées par des dispositifs équivalents tels que cliquets ou barres, les galets étant alors remplacés par de simples coulisseaux.

Mais, dans un mode de réalisation plus perfectionné, on peut associer au dispositif multiplicateur de rotation un servo-mécanisme de commande agissant sous le contrôle de la pesanteur apparente sur le mouvement des consoles glissantes.

Un tel servo-mécanisme a été représenté à titre d'exemple sur la Figure 6.

Dans ce cas, la console glissante 11a qui, comme précédemment, s'appuie sur les côtés du montant latéral 3a par des galets associés à des roues libres 18aei, 18ais, est munie en outre d'un pignon 41a qui engrène avec une crémaillère 40a ménagée le long du montant latéral 3a.

Sur la Figure 6, on a indiqué également le galet 9a porté, comme dans la disposition de la Figure 5, par une traverse 21 solidaire de la partie secondaire et qui exerce l'action de stabilisation par multiplication de rotation.

Le pignon 41a est calé sur un arbre qui peut être solidarisé en rotation, par l'intermédiaire d'un manchon coulissant 45a et d'un embrayage 44a, avec un arbre 42 entraîné en permanence, dans un sens constant, soit par un moteur indépendant 43, soit par le moteur du véhicule, par l'intermédiaire de tout mécanisme adéquat, cet arbre 42 ainsi que le moteur 43 étant portés de façon fixe par le mât de structure 4 appartenant à la partie primaire du véhicule.

L'embrayage 44a est commandé par une butée 46a sur laquelle pousse un ressort 47a, lui-même poussé par un levier auxiliaire en forme de bâti 48, articulé en 54 sur le mât 4 et soumis à l'action d'un téton 56 fixé sur le bras 5 solidaire de la partie secondaire II. Lorsque le secondaire II est poussé, comme indiqué sur la Figure 6, vers la droite par la force centrifuge ou par la composante horizontale de la pesanteur (à l'arrêt), le téton 56 solidaire du bras secondaire 5 s'écarte vers la droite et fait pivoter le bâti 48 qui met en action l'embrayage 44a. Le pignon 41a est alors entraîné par le moteur 43 dont le sens de rotation est choisi pour provoquer le déplacement relatif vers le bas, dans le sens de la flèche 49, de la console 11a le long du montant latéral 3a et par conséquent le déplacement relatif vers le haut du montant 3a dans le sens de la flèche 50. Ce déplacement relatif est autorisé par les roues libres 18aei, 18ais et a pour effet, en prenant appui sur les roues, de faire tourner l'ensemble dans le sens de la flèche 51, c'est à dire, comme le ferait le conducteur, vers l'intérieur de la courbe de la trajectoire s'il s'agit de la force centrifuge, ou vers la verticale s'il s'agit d'une composante de la pesanteur, le plan médian P₁ du primaire venant en coïncidence avec le plan médian P₂ du secondaire.

Un tel mouvement a évidemment tendance à provoquer la création d'une force d'inertie du secondaire opposée au mouvement, c'est-à-dire de même sens que la force centrifuge et il peut y avoir lieu de créer un "feed-back" pour éviter tout effet exponentiel. Selon un autre perfectionnement de l'invention, un tel effet de feed-back est obtenu grâce au mouvement du balancier 2b qui est de sens opposé à celui du bras secondaire 5. En effet, l'axe de suspension 54 du bâti 48 est placé, non pas directement sur le mât 4, mais sur un disque 52 porté par l'axe O et soumis à l'action de deux patins à frottement sec et/ou visqueux 53a, 53b portés par le balancier 2b : la rotation de la traverse 2b tend ainsi à diminuer l'action du bâti 48. Les patins 53a et 53b peuvent aussi être constitués par des aimants

Toutefois, la limitation par des butées 55a, 55b, pour des raisons d'encombrement, du mouvement de la caisse, pourra dans certains cas être suffisante pour limiter, voire supprimer, l'action des effets d'inertie.

## Revendications

1. Dispositif de stabilisation d'un véhicule inclinable comprenant :
- une partie primaire (I) reposant sur le sol par l'intermédiaire d'au moins trois roues, respectivement une roue directrice et deux roues (1a, 1b), placées de part et d'autre du plan médian (P1) de la partie primaire et formant un train arriére,
- une partie secondaire (II) montée pivotante sur la partie primaire (I) autour d'un axe de suspension (O-O′) parallèle au sol et situé dans le plan médian (P1) de la partie primaire,
- un système à parallélogramme déformable d'inclinaison de la partie primaire et des deux roues par rapport au sol, comprenant deux montants latéraux (3a, 3b) parallèles au plan médian (P₁) et articulés à leurs extrémités , sur deux balanciers parallèles (2a, 2b) articulés eux-mêmes sur la partie primaire (I), respectivement autour de deux axes superposés (Ia, Ib) placés dans le plan médian (P₁) et parallèles au sol, les axes des deux roues (1a, 1b) étant montés respectivement sur lesdits montants (3a, 3b) perpendiculairement au plan médian (P₁),
- un système multiplicateur de rotation comprenant une traverse (8) solidaire en rotation de la partie secondaire (II) et s'étendant transversalement de part et d'autre du plan médian (P₂) de celle-ci passant par l'axe de suspension (O-O′) et deux bras transversaux ( 11a, 11b) montés respectivement sur les deux montants latéraux (3a, 3b) du parallélogramme, transversalement à ces derniers et prenant appui respectivement, chacun sur l'extrémité de la traverse de commande (8)opposée au montant latéral (3a, 3b) correspondant, caractérisé par le fait que chaque bras transversal ( 11a, 11b) est relié au montant latéral correspondant (3a, 3b) par l'intermédiaire d'une liaison glissante (13a, 13b) permettant le déplacement du bras ( 11a, 11b) le long du montant (3a, 3b) en restant perpendiculaire à ce dernier, ladite liaison (13a, 13b) comprenant des moyens (12, 18) de commande sélective du blocage et du déblocage du bras en fonction des orientations relatives des plans médians (P₁, P₂) des deux parties primaire (I) et secondaire (II) par rapport à la direction de la verticale apparente.

2. Dispositif de stabilisation selon la revendication 1, caractérisé par le fait que la traverse de commande (8) est centrée sur l'axe de suspension (O-O′) de la partie secondaire .

3. Dispositif de stabilisation selon la revendication 1, caractérisé par le fait que la traverse de commande (21) est montée à une certaine distance de l'axe de suspension (O-O′) et s'étend symétriquement de part et d'autre du plan médian (P₂) passant par l'axe de suspension (O-O′) et le centre de gravité (G₂) de la partie secondaire (II).

4. Dispositif de stabilisation selon l'une des revendications 1, 2, 3 , caractérisé par le fait que la liaison glissante (13a, 13b) entre chaque bras transversal (11a, 11b ) et le montant latéral (3a, 3b) correspondant comprend quatre patins (12) placés en deux paires de chaque côté , respectivement interne et externe du montant (3a, 3b) et sur deux niveaux , respectivement supérieur et inférieur, chaque montant (3a, 3b) pouvant glisser à frottement doux entre les patins (12) correspondants lorsque les deux bras ( 11a, 11b ) sont alignés en position moyenne avec la traverse (8) et que, lorsque au moins l'un des bras (11a, 11b) est écarté de sa position moyenne par rapport à la traverse (8), du fait d'un déplacement du centre de gravité (G₂) par rapport au plan médian (P₁) de la partie primaire (I), cet écartement du bras ( 11a, 11b ) détermine l'application sur le montant (3a, 3b) correspondant de deux des patins (12) placés respectivement sur des côtés opposés du montant et à des niveaux différents et provoque par frottement la solidarisation du montant (3a, 3b) avec le bras (11a, 11b) correspondant.

5. Dispositif de stabilisation selon l'une des revendications 1, 2, 3 ,caractérisé par le fait que chaque liaison glissante (13a, 13b) entre un bras transversal (11) et le montant latéral correspondant (3) comprend une première paire de galets (18 ais, 18 aei) (18 bis, 18 bei) montés rotatifs sur le bras autour d'axes parallèles à l'axe de suspension et placés respectivement de part et d'autre du montant latéral et à deux niveaux, le galet supérieur (18 ais) prenant appui sur le côté interne du montant et le galet inférieur (18 aei) sur le côté externe , chaque galet étant associé à une roue libre ou autre moyen équivalent autorisant sa rotation uniquement dans le sens correspondant à une descente du bras (11) vers le bas du montant (3) de telle sorte que, en cas d'action de la traverse sur le bras (11 ) tenant à faire monter ce dernier, les deux galets appliqués respectivement sur les deux côtés du montant se bloquent en rotation et déterminent la solidarisation du bras (11 ) avec le montant (3) et par conséquent la mise en oeuvre du système multiplicateur.

6. Dispositif de stabilisation selon l'une des revendications 4 et 5, caractérisé par le fait que les deux bras (11a, 11b )reposent, respectivement , dans le sens de descente, sur deux butées élastiques (15a, 15b) solidaires de la partie primaire.

7. Dispositif de stabilisation selon la revendication 5, caractérisé par le fait que chaque liaison glissante (13a)(13b) comprend une seconde paire de galets (18aes, 18 aii) (18bes, 18bii) placés respectivement sur l'autre niveau et du côté opposé aux galets de la première paire et associés chacun à une roue libre permettant la rotation des galets de la seconde paire dans le sens de montée du bras (11) le long du montant (3) correspondant et bloquant la rotation dans le sens de descente de façon à déterminer dans ce cas la solidarisation du bras (11) avec le montant (3).

8. Dispositif de stabilisation selon l'une quelconque des revendications 1 à 7 , caractérisé par le fait que chaque bras (10a, 10b) est associé à un servo-mécanisme (41, 42, 43, 44, 48) de commande d'un déplacement contrôlé du bras vers le bas du montant (3a, 3b) correspondant permettant à la partie primaire (I) de suivre une inclinaison donnée volontairement à la partie secondaire (II), ce servo-mécanisme comprenant deux pignons (41a, 41b) portés respectivement par les deux consoles transversales (11a, 11b), engrenant chacun avec une crémaillère (40a, 40b) ménagée le long du montant (3A, 3b) correspondant et montés chacun sur un arbre de rotation perpendiculaire au montant (3a, 3b) et susceptible d'être solidarisé en rotation au moyen d'un embrayage (44a, 44b) avec un arbre (42) entraîné en rotation en permanence par un moteur (43) dans le sens permettant le déplacement de chaque pignon (41a, 41b) vers le bas le long de la crémaillère (40a, 40b) correspondante, le servo-mécanisme comprenant, en outre, un levier (48) de commande de l'un ou l'autre des embrayages (44a, 44b), articulé autour d'un axe de suspension (54) sur une pièce (52) suivant les mouvements d'inclinaison de la partie primaire (I) par rapport au sol et actionné par une pièce (56) suivant les mouvement d'inclinaison de la partie secondaire (II), pour la commande de l'un ou l'autre des embrayages (44a, 44b) lorsque l'inclinaison de la partie secondaire (II) du côté du montant correspondant (3a, 3b) est supérieure à l'inclinaison de la partie primaire (I) du même côté.

9. Dispositif de stabilisation selon la revendication 8, caractérisé par le fait que la pièce (52) suivant l'inclinaison de la partie primaire (I) est un disque (52) centré sur la partie primaire (I) autour de l'axe de suspension (O-O′) et portant, à un niveau inférieur, l'axe (54) d'articulation de levier de commande (48), le disque (52) pouvant être solidarisé en rotation avec le balancier supérieur (2b) du parallèlogramme par des moyens (53a, 53b) à frottement sec ou visqueux.

10. Procédé de stabilisation d'un véhicule inclinable comprenant :
- une partie primaire (I) reposant sur le sol par l'intermédiaire d'au moins trois roues, respectivement une roue directrice et deux roues (1a, 1b) placées de part et d'autre du plan médian (P₁) de la partie primaire et formant un train arrière,
- une partie secondaire (II) montée pivotante sur la partie primaire (I) autour d'un axe de suspension O-O′ du plan médian parallèle au sol,
- un système à parallélogramme déformable, d'inclinaison de la partie primaire (I) et des deux roues (1a, 1b) par rapport au sol, comprenant des montants latéraux (3a, 3b) parallèles au plan médian, articulés à leurs extrémités sur deux balanciers parallèles (2a, 2b) articulés sur la partie primaire (I), respectivement autour de deux axes superposés (Ia, Ib) placés dans le plan médian (P₁) et parallèles au sol, les axes des deux roues étant montés respectivement sur lesdits montants (3a, 3b) suivant des directions perpendiculaires au plan médian (P₁), procédé dans lequel, en cas d'inclinaison de la partie primaire d'un angle A par rapport à la verticale, on commande une rotation de la partie secondaire d'un angle B supérieur à A au moyen d'un système multiplicateur de rotation comprenant une traverse de commande (8) solidaire en rotation de la partie secondaire (II) et s'étendant transversalement de part et d'autre du plan médian (P₂) de la partie secondaire (II) passant par l'axe de suspension de celle-ci, et deux bras transversaux ( 11a, 11b ) montés respectivement sur les deux montants latéraux (3a, 3b) du parallélogramme transversalement à ces derniers et prenant appui respectivement, chacun sur l'extrémité de la traverse de commande (8) opposée au montant latéral (3a, 3b) correspondant, caractérisé par le fait que chaque bras transversal (11a, 11b) peut se déplacer parallèlement à lui-même le long du montant latéral correspondant (3a, 3b) lorsque les plans médians (P₁, P₂) des deux parties primaire (I) et secondaire (II) coïncident et sont orientés suivant la direction de la verticale apparente et que, en cas de déplacement du centre de gravité (G₂) de la partie secondaire sous l'action de la pesanteur et des forces extérieures d'un côté ou de l'autre du plan médian (P₁) de la partie primaire, on détermine la solidarisation d'au moins un bras transversal (11) avec le montant latéral (3) correspondant de façon à mettre en oeuvre le système multiplicateur de rotation dans le sens permettant un soulèvement du centre de gravité (G₂) de la partie secondaire (II) par rotation relative de celle-ci par rapport à la partie primaire (I) avec production d'un couple de redressement ramenant les plans médians (P₁, P₂) des deux parties primaire (I) et secondaire (II) dans l'alignement l'un de l'autre et dans la direction de la verticale apparente.

## Patentansprüche

1. Stabilisierungsvorrichtung für ein neigbares Fahrzeug bestehend aus :
- einem auf dem Boden über drei Räder aufliegenden Primärteil (I), und zwar je einem Lenkrad und zwei beiderseits der Mittelebene (P1) des Primärteils angeordneten, ein hinteres Fahrwerk bildende Räder (1a, Ib),
- einem Sekundärteil (II), das schwenkbar um eine parallel zum Boden angeordnete, in der Mittelebene (P1) des Primärteils liegende Aufhängungsachse (O-O′) auf dem Primärteil (I) montiert ist,
- einem verformbaren parallelogrammartigen Neigungssystem des Primärteils und der beiden Räder gegenüber dem Boden, bestehend aus zwei parallel zur Mittelebene (P1) angeordneten Seitenstützen (3a, 3b), die mit ihren Enden an zwei parallelen Schwingen (2a, 2b) angelenkt sind, welche ihrerseits jeweils um zwei übereinanderliegenden, in der Mittelebene (P1) angeordneten, parallel zum Boden verlaufenden Achsen (1a, 1b) auf dem Primärteil (I) gelenkig angeordnet sind, wobei die Achsen der beiden Räder (1a, 1b) jeweils auf diesen Stützen (3a, 3b) senkrecht zur Mittelebene (P1) montiert sind,
- einem Rotationsübersetzungssystem bestehend aus einer drehbeweglich mit dem Sekundärteil (II) verbundenen, sich beiderseits der durch die Aufhängungsachse (O-O′) verlaufenden Mittelebene (P2) desselben quer erstreckenden Traverse (8), und aus zwei Querarmen (11a, 11b), die jeweils auf den beiden Seitenstützen (3a, 3b) des Parallelogramms quer zu den letzteren montiert sind und sich jeweils am Ende der der entsprechenden Seitenstütze (3a, 3b) entgegengesetzten Steuertraverse (8) abstützen, dadurch gekennzeichnet, dass jeder Querarm (11a, 11b) mit der entsprechenden Seitenstütze (3a, 3b) über eine Gleitverbindung (13a, 13b) verbunden ist, sodass der Arm (11a, 11b) unter Beibehaltung seiner Senrechtlage zur Stütze entlang derselben (3a, 3b) verfahren werden kann, wobei diese Verbindung (13a, 13b) Steuermittel (12, 18) zur selektiven Blockierung und Entriegelung des Armes entsprechend den relativen Ausrichtungen der Mittelebenen (P1, P2) der beiden Primär- (I) und Sekundärteile (II) gegenüber der Richtung der scheinbaren Senkrechte aufweist.

2. Stabilisierungsvorrichtung nach Anspruch 1, dadurch gekennzeichnet, dass die Steuertraverse (8) auf die Aufhängungsachse (O-O′) des Sekundärteils zentriert ist.

3. Stabilisierungsvorrichtung nach Anspruch 1, dadurch gekennzeichnet, dass die Steuertraverse (21) in einem bestimmten Abstand von der Aufhängungsachse (O-O′) montiert ist und sich beiderseits der durch die Aufhängungsachse (O-O′) und durch den Schwerpunkt (G2) des Sekundärteils (II) verlaufende Mittelebene (P2) symmetrisch erstreckt.

4. Stabilisierungsvorrichtung nach einem der Ansprüche 1, 2, 3, dadurch gekennzeichnet, dass die Gleitverbindung (13a, 13b) zwischen jedem Querarm (11a, 11b) und der entsprechenden Seitenstütze (3a, 3b) vier auf jeder Seite, jeweils innen und aussen an der Stütze (3a, 3b) und in zwei Ebenen, jeweils eine untere und eine obere, paarweise angeordneten Gleitkufen (12) umfasst, wobei jede Stütze (3a, 3b) zwischen den entsprechenden Gleitkufen (12) mit einer leichten Reibung gleiten kann, wenn die beiden Arme (11a, 11b) mit der Traverse (8) in einer Mittellage fluchten und dass, wenn aufgrund einer Verlagerung des Schwerpunktes (G2) zur Mittelebene (P1) des Primärteils (I) mindestens jeweils ein Arm (11a, 11b) von seiner Mittellage zur Traverse (8) verschoben wird, diese Verschiebung des Armes (11a, 11b) das Andrücken auf der entsprechenden Stütze (3a, 3b) von zwei jeweils auf entgegengesetzten Seiten der Stütze und in zwei unterschiedlichen Ebenen angeordneten Gleitkufen (12) bewirkt, und durch Reibung die Verbindung der Stütze (3a, 3b) mit dem entsprechenden Arm (11a, 11b) herstellt.

5. Stabilisierungsvorrichtung nach einem der Ansprüche 1, 2, 3, dadurch gekennzeichnet, dass jede Gleitverbindung (13a, 13b) zwischen einem Querarm (11) und der entsprechenden Seitenstütze (3) ein erstes Paar Rollen ((18ais, 18aei) (18bis, 18bei) umfasst, welche drehbar um parallel zur Aufhängungsachse angeordneten Achsen auf dem Arm montiert und jeweils beiderseits der Seitenstütze in zwei Ebenen angeordnet sind, wobei die obere Rolle (18ais) auf der Stützeninnenseite und die untere Rolle (18aei) auf der -aussenseite zur Abstützung kommen, und wobei jeder Rolle ein Freilaufrad oder ein anderes gleichwertiges Mittel zugeordnet ist, die dessen Umdrehung nur in die einem Absenken des Armes (11) nach unten an der Stütze (3) entsprechenden Richtung ermöglicht, sodass, wenn durch Einwirkung der Traverse auf den Arm (11) dieser sich dadurch nach oben bewegen will, sich die zwei jeweils auf beiden Seiten der Stütze angedrückten Rollen bloquieren und diese die Verbindung des Armes (11) mit der Stütze (3) und demzufolge den Einsatz des Übersetzungssystems bewirken.

6. Stabilisierungsvorrichtung nach einem der Ansprüche 4 und 5, dadurch gekennzeichnet, dass die beiden Arme (11a, 11b) jeweils in der Absenkrichtung auf zwei elastischen, mit dem Primärteil verbundenen Anschläge (15a, 15b) aufliegen.

7. Stabilisierungsvorrichtung nach Anspruch 5, dadurch gekennzeichnet, dass jede Gleitverbindung (13a) (13b) ein zweites Paar Rollen (18aes, 18aii) (18bes, 18bii) aufweist, die jeweils in der anderen Ebene und auf der dem ersten Paar Rollen entgegengesetzten Seite angeordnet und denen je ein Freilaufrad zugeordnet ist, welches die Umdrehung von dem zweiten Paar Rollen in der Aufwärtsrichtung des Armes (11) entlang der entsprechenden Stütze (3) zulässt und die Umdrehung in der Abwärtsrichtung bloquiert, um somit die Verbindung des Armes (11) mit der Stütze (3) herzustellen.

8. Stabilisierungsvorrichtung nach irgendeinem der Ansprüche 1 bis 7, dadurch gekennzeichnet, dass jedem Arm (10a, 10b) eine Servoeinrichtung (41, 42, 43, 44, 48) zur Steuerung einer kontrollierten Bewegung des Armes nach unten an der entsprechenden Stütze (3a, 3b) zugeordnet ist, wodurch das Primärteil (I) einer dem Sekundärteil (II) zwangsläufig gegebenen Neigung folgen kann, wobei diese Servoeinrichtung zwei jeweils durch die beiden Querkonsolen (11a, 11b) getragene Ritzel (41a, 41b) aufweist, die jeweils in eine entlang der entsprechenden Stütze (3a, 3b) angeordnete Zahnradstange (40a, 40b) eingreifen und jeweils auf einer senkrecht zur Stütze (3a, 3b) angeordneten Drehwelle montiert sind, die mittels einer Kupplung (44a, 44b) drehbeweglich mit einer ständig über einen Motor (43) angetriebene Welle (42) in jene Richtung verbindbar ist, dass jedes Ritzel (41a, 41b) nach unten entlang der entsprechenden Zahnradstange (40a, 40b) verfahren werden kann, wobei die Servoeinrichtung weiterhin einen Betätigungshebel (48) der einen bzw. der anderen Kupplung (44a, 44b) aufweist, der um eine Aufhängungsachse (54) auf einem die Neigungsbewegungen des Primärteils (I) zum Boden folgenden Teil (52) angelenkt ist und über ein Teil (56) betätigt wird, das den Neigungsbewegungen des Sekundärteils (II) folgt zwecks Betätigung der einen bzw. der anderen Kupplung (44a, 44b), wenn die Neigung des Sekundärteils (II) auf der Seite der entsprechenden Stütze (3a, 3b) grösser als die Neigung des Primärteils (I) auf derselben Seite ist.

9. Stabilisierungsvorrichtung nach Anspruch 8, dadurch gekennzeichnet, dass das die Neigung des Primärteils (I) folgende Teil (52) als runde Scheibe (52) ausgebildet ist, die um die Aufhängungsachse (O-O′) auf das Primärteil (I) zentriert ist, und in einer unteren Ebene die Gelenkachse (54) des Betätigungshebels (48) trägt, wobei die Scheibe (52) mit der oberen Schwinge (2b) des Parallelogramms über trockene oder zähflüssige Reibungsmittel (53a, 53b) drehbeweglich verbunden werden kann.

10. Verfahren zur Stabilisierung eines neigbaren Fahrzeuges bestehend aus :
- einem Primärteil (I), das über mindestens drei Räder, und zwar je einem Lenkrad und zwei Räder (1a, 1b) auf dem Boden aufliegt, die beiderseits der Mittelebene (P1) des Primärteils angeordnet sind und ein hinteres Fahrwerk bilden,
- einem Sekundärteil (II), das schwenkbar um eine Aufhängungsachse O-O′ der zum Boden parallelen Mittelebene auf dem Primärteil (I) montiert ist,
- einem verformbaren parallelogrammartigen Neigungssystem des Primärteils (I) und der beiden Räder (1a, 1b) zum Boden, bestehend aus parallel zur Mittelebene angeordneten Seitenstützen (3a, 3b), die mit ihren Enden an zwei parallelen Schwingen (2a, 2b) angelenkt sind, die jeweils um zwei übeinanderliegenden, in der Mittelebene (P1) befindlichen, parallel zum Boden angeordneten Achsen (1a, 1b) auf dem Primärteil (I) gelenkig montiert sind, wobei die Achsen der beiden Räder jeweils auf diesen Stützen (3a, 3b) gemäss senkrecht zur Mittelebene (P1) verlaufenden Richtungen montiert sind, Verfahren, bei welchem, sollte sich das Primärteil um einen Winkel A zur Senkrechten neigen, so wird eine Umdrehung des Sekundärteils um einen Winkel B, der grösser als A ist, mit einem Drehübersetzungssystem bewirkt, bestehend aus einer drehbeweglich mit dem Sekundärteil (II) verbundenen und sich beiderseits der durch die Aufhängungsachse verlaufenden Mittelebene (P2) des Sekundärteils (II) quer erstreckenden Steuertraverse (8), und aus zwei jeweils auf zwei Seitenstützen (3a, 3b) des Parallelogramms quer zu diesen montierten, sich jeweils am Ende der der entsprechenden Seitenstütze (3a, 3b) entgegengesetzten Steuertraverse (8) abstützende Querarme (11a, 11b), dadurch gekennzeichnet, dass jeder Querarm (11a, 11b) entlang der entsprechenden Seitenstütze (3a, 3b) parallel zu sich selbst verfahrbar ist, wenn die Mittelebenen (P1, P2) der beiden Primär- (I) und Sekundärteile (II) zusammenfallen und gemäss der Richtung der scheinbaren Senkrechte ausgerichtet sind, und dass, beim Verlagern des Schwerpunktes (G2) des Sekundärteils unter der Einwirkung der Schwerkraft und der Aussenkräfte auf der einen bzw. der anderen Seite der Mittelebene (P1) des Primärteils die Verbindung mindestens eines Querarmes (11) mit der entsprechenden Seitenstütze (3) derart hergestellt wird, dass das Übersetzungssystem mit der Drehrichtung zum Einsatz kommt, die ein Anheben des Schwerpunktes (G2) des Sekundärteils (II) durch relative Drehung desselben zum Primärteil (I) unter Erzeugung eines Aufrichtmomentes ermöglicht, sodass die Mittelebenen (P1, P2) der beiden Primär- (I) und Sekundärteile (II) wieder miteinander fluchten und in die Richtung der scheinbaren Senkrechte zurückversetzt werden.

## Claims

1. A stabilization device for an inclinable vehicle comprising:
- a primary part (I) resting upon the ground through at least three wheels, respectively a steering forewheel and two rear wheels (1a,1b), placed on each side of the median plane (P1),
- a secondary part (II) mounted on primary part (I) rotatably around a suspension axis (O-O′) parallel to the ground and situated in the median plane (P1) of primary part,
- an inclination system with a deformable parallelogram allowing the inclination of primary part (I) and of the wheels in relation to the ground, comprising two lateral vertical rods (3a,3b) parallel to the median plane (P1) and hinged at their ends with two parallel equalizers (2a,2b) articulated on on primary part (I), respectively around two axles (Ia,I,b) placed one above the other in the median plane (P1) and parallel to the ground, the axles of both wheels (1a,1b) being mounted respectively on both lateral rods (3a,3b) perpendicular to median plane (P1),
- a rotation multiplying system comprising a crossbar (8) integral in rotation with secondary part (II), which extends transversely on each side of the median plane (P2) of said secondary part containing the suspension axis (O-O′) and two transverse sliding arms or consoles (11a,11b), mounted respectively on both lateral rods (3a,3b) of the parallelogram transversely to said rods and weighing each respectively upon the end of the crossbar (8) opposed to the corresponding lateral rod (3a,3b), wherein each arm (11a,11b) is linked to the corresponding lateral rod through a sliding linkage (13a,13b) allowing movement of arm (11a,11b) along lateral rod (3a,3b) remaining perpendicular to said rod, said linkage (13a,13b) comprising means (12,18) for selective control of locking and unlocking of the arm, taking into account the relative angles between median plane (P1,P2) of both primary part (I) and secondary part (II) in relation to the direction of the apparent vertical.

2. A stabilization device according to claim 1, wherein the control crossbar (8) is centred on the secondary part suspension axis (O-O′).

3. A stabilization device according to claim 1, wherein the control crossbar (21) is positioned at a distance from suspension axis (O-O′), symmetrically extending on each side of the median plane (P2) containing suspension axis (O-O′) and passing by secondary part (II) centre of gravity.

4. A stabilization device according to one of claims 1, 2, or 3 wherein the sliding linkage (13a,13b) between each transversal sliding arm or console (11a,11b) and the corresponding lateral rod (3a,3b) comprises four shoes (12) arranged in two pairs on each side, respectively the inner side and the outer side of the rod (3a,3b) and at two different levels, respectively upper level and lower level, each lateral rod (3a,3b) being allowed to slide with low friction between corresponding shoes (12) when both arms (11a,11b) are in line in middle position with crossbar (8) and, when at least one of both arms (11a,11b) is discarded from its middle position in relation to crossbar (8) due to a movement of the centre of gravity (G2) of secondary part (II) in relation to median plane (P1) of the primary part (I), this movement of arm (11a,11b) induces the application upon corresponding rod (3a,3b) of two of the shoes (12) placed respectively on the opposite sides of said rod and at different levels, and through friction makes the lateral rod (3a,3b) integral with the corresponding arm (11a,11b).

5. A stabilization device according to one of claims 1, 2 or 3, wherein each sliding linkage (13a,13b) between an arm (11) and the corresponding lateral rod (3) comprises a first pair of rollers (18ais,18aei) (18bis,18bei) mounted rotatable an the arm around axles parallel to the axis of suspension (O-O′) and placed respectively on each side of the lateral rod and at two levels, the upper roller (18ais) bearing upon the inner side of the lateral rod (3) and the lower roller (18aei) upon the outer side, each roller being associated with a freewheel or other equivalent means authorizing its rotation only in the direction corresponding to a downwards movement of arm (11) towards the lower part of the rod (3) so that, when crossbar (8) tends to move arm (11) upwards, both rollers applied respectively on both sides of the lateral rod (3) are blocked in rotation and make arm (11) integral with lateral rod (3) and induce the action of the rotation multiplying system.

6. A stabilization device according to one of claims 4 and 5 wherein both arms (11a,11b) are resting respectively, in the downwards motion, on two resilient thrusts 15a,15b) integral with the primary part.

7. A stabilization device according to claim 5, wherein each sliding linkage (13a,13b) comprises a second pair of rollers (18aes,18aii), (18bes,18bii) placed respectively at the other level and on the opposite side in relation to the first pair of rollers, each of them being associated with a freewheel allowing rotation of the rollers of said second pair in the direction where arm (11) slides upwards along corresponding lateral rod (3) and blocking rotation downwards so as, in that case, to make arm (11) integral with rod (3).

8. A stabilization device according to any of claims 1 to 7, wherein each arm (11a,11b) is associated with a servomechanism (41,42,43,44,48) which controls downward movement of corresponding lateral rod (3a,3b) and allowing the primary part (I) to follow an inclination given by the driver to the secondary part (II), said servomechanism comprising two pinions (41a,41b) born respectively by both arms (11a,11b), each pinion meshing with a rack (40a,40b), provided along corresponding lateral rod (3a,3b), and each mounted upon a rotation shaft perpendicular to lateral rod (3a,3b) and likely to be made integral in rotation, by means of a clutch (44a,44b) with a shaft (42) driven in permanent rotation by a motor (43) in the direction allowing the movement of each pinion (41a,41b) downwards along corresponding rack (40a,40b), said servomechanism comprising also a lever (48) controlling either clutch (44a,44b) and articulated around a suspension axis (54) upon a rotating piece (52) following the inclination movements of primary piece(I) in relation to the ground and controlled by a cog (56) according to the inclination movements of secondary part (II), to control one of the other clutch (44a,44b) when the inclination of secondary part (II) towards corresponding lateral rod (3a,3b) is higher than the inclination of primary part (I) towards the same side.

9. A stabilization device according to claim 8, wherein said rotating part (52) following the inclination of the primary part (I) is a disc (52) centred upon primary part (I) around suspension axis (O-O′) and bearing, at a lower level, the axle (54) upon which control level (48) is articulated, said disc (52) being driven in rotation by the upper equalizer (2b) of the parallelogram through the means (53a,53b) by dry or viscous friction.

10. A stabilization process for stabilazing a vehicle comprising;
- a primary part (I) resting on the ground through three wheels at least, respectively a steering forewheel and wheels (1a,1b) located on each side of primary part median plane (P1) and composing the rear train of wheels,
- a secondary part (II) mounted rotatably on primary part (I) around a suspension axis (O-O′) of the median plane parallel to the ground,
- an inclination system with deformable parallelogram which allows the inclination of primary part (I) and both wheels (1a,1b) in relation to the ground, comprising lateral rods (3a,3b) parallel to the median plane, hinged at their ends with two parallel equalizers (2a,2b) articulated on primary part (I), respectively around two axles (Ia,Ib) placed one above the other in median plane (P1) and parallel to the ground, the axles of the two wheels being mounted respectively on the said rods (3a,3b) according to directions perpendicular to median plane (P1), a process in which, in case of primary part inclination by an angle A in relation to the vertical, one controls the rotation of secondary part by an angle B higher than A by means of a rotation multiplying system comprising a control crossbar (8) integral in rotation with secondary part (II) and transversely extending on either side of median plane (P2) of secondary part (II) containing the suspension axis thereof, and two transversal arms (11a,11b) respectively mounted on both lateral rods (3a,3b) of the parallelogram transversely thereto and weighing respectively, each on the end of control crossbar (8) opposed to corresponding lateral rod (3a,3b), wherein each transversal arm (11a,11b) can move parallely to itself along corresponding lateral rod (3a,3b) when median planes (P1,P2) of primary part (I) and secondary (II) are coinciding along the direction of apparent vertical and when, in case the centre of gravity (G2) of secondary part is discarded under action of gravity force or external forces on one side or the other of primary part median plane (P1), at least one transversal arm (11) is made integral with the corresponding lateral rod (3), so as to actuate the rotation multiplying system in the direction allowing a case of the secondary part (II) centre of gravity (G2) by relative rotation thereof in relation to primary part (I) together with the generation of a torque making planes (P1,P2) of both primary part (I) and secondary part (II) to mate in-line with one another and in the direction of the apparent vertical.
